# EUROPÄISCHE PATENTSCHRIFT

(11) **EP 1 190 897 B1**
(45) Veröffentlichungstag und Bekanntmachung des Hinweises auf die Patenterteilung: **10.01.2007**
(21) Anmeldenummer: 01122784.0
(22) Anmeldetag: 21.09.2001
(51) Int. Cl.: B60P 1/28, B62D 25/20

(54) **Vefahren und Bausatzgruppe für die Herstellung von Kippbrücken**
Method and material for producing dump buckets
Procédé et matériaux pour la fabrication de bennes basculantes

(30) Priorität: 22.09.2000 DE 20016474 U
(43) Veröffentlichungstag der Anmeldung: 27.03.2002
(73) Patentinhaber: Franz Xaver Meiller Fahrzeug- und Maschinenfabrik-GmbH & Co KG, 80997 München (DE)
(72) Erfinder: Seifritz, Harald, 89233 Neu-Ulm (DE)
(74) Vertreter: Tiesmeyer, Johannes

(56) Entgegenhaltungen:
- FR-A- 2 736 014
- US-A- 4 412 699
- US-A- 5 836 657

## Beschreibung

Die Erfindung betrifft ein Verfahren und eine Bausatzgruppe für die Herstellung von Kippbrücken für Kipperfahrzeuge gemäß den Oberbegriffen der Ansprüche 1 und 7 eine Kippbrücke, gemäß dem Oberbegriff des Anspruchs 20, die zumindest teilweise aus einem Bausatz einer solchen Bausatzgruppe hergestellt ist, und ein Kippbrückenunterbau - Basismodul gemäß dem Oberbegriff des Anspruchs 21.

Eine gattungsgemäße Vorrichtung für Kipperfahrzeuge wird in US 5 836 657 A definiert.

Kipperfahrzeuge, bei denen es sich um selbstfahrende Kipperfahrzeuge oder um Kipperanhänger (einschließlich Kipper-Sattelauflieger) handeln kann, werden in unterschiedlichen Ausgestaltungen, Dimensionen und Aufbauvarianten entsprechend dem Bedarf der Fahrzeugnutzer hergestellt. Entsprechend vielfältig sind die Varianten der Kippbrücken, mit denen die Kipperfahrzeuge auszustatten sind. Industrielle Hersteller betreffender Fahrzeugaufbauten haben üblicherweise Kippbrücken unterschiedlicher Abmessungen, Kippbrücken mit unterschiedlichen Seitenwand- und Rückwandkonstruktionen, Kippbrücken mit unterschiedlichen Kippfreiheitsgraden (Hinterkipper, Zweiseitenkipper, Dreiseitenkipper), Kippbrücken mit unterschiedlichen Schüttleisten etc. im Lieferprogramm, um der am Markt geforderten Vielfalt genügen zu können.

Eine solche Vielfalt der Produktpalette stellt die Hersteller von Fahrzeugaufbauten jedoch vor logistische Probleme, insbesondere vor Lagerhaltungsprobleme, wenn die komplette Produktpalette auf Vorrat produziert werden muss, um auf Bestellungen bzw. Aufträge möglichst schnell reagieren zu können.

Der Erfindung liegt die Aufgabe zugrunde, eine Methode und Mittel bereitzustellen, mit denen eine Produktvielfalt bei der Herstellung von Kippbrücken bzw. Kippbrückenunterbauten auf einfachere und kostengünstigere Weise als bisher realisierbar ist.

Zur Lösung dieser Aufgabe wird erfindungsgemäß ein Verfahren zur Herstellung von Kippbrückenunterbauten bzw. Kippbrücken angegeben, das in bevorzugter Weise die folgenden Schritte umfasst:
a) Bereitstellen von mehreren, im Wesentlichen einheitlichen Kippbrückenunterbau-Basismodulen,
b) Bereitstellen von unterschiedlichen Kippbrückenseitenelementen und ggf. weiteren Kippbrücken-Bausatzelementen,
c) Auswahl der mit einem jeweiligen Kippbrückenunterbau-Basismodul aus der Bereitstellung gemäß Schritt a) zu einem Kippbrückenunterbau zu vereinigenden Kippbrückenseitenelemente und ggf. von weiteren Bausatzelementen aus der Bereitstellung gemäß Schritt b) nach Maßgabe einer gewünschten Kippbrücke,
d) Anbau der ausgewählten Seitenelemente und der ggf. weiteren Bausatzelemente an das betreffende Kippbrückenunterbau-Basismodul,
e) Wiederholung der Schritte c) und d).

Bevorzugte Weiterbildungen des erfindungsgemäßen Verfahrens sind in den Ansprüchen 1 - 6 angegeben.

Das Verfahren wird bevorzugt unter Verwendung einer erfindungsgemäßen Bausatzgruppe nach einem der Ansprüche 7 - 19 durchgeführt.

Die Bausatzgruppe umfasst im Wesentlichen mehrere einheitlich aufgebaute Kippbrückenunterbau-Basismodule, die jeweils einen Kippbrückenbodenbereich aufweisen und zur Anbringung wahlweise unterschiedlicher Kippbrückenseitenelemente vorbereitet sind und ferner mehrere unterschiedliche Sätze von Kippbrückenseitenelementen, wobei die Kippbrückenseitenelemente passend zum Zusammenbau mit dem Kippbrückenunterbau-Basismodul ausgebildet sind.

Unter den Begriff Kippbrückenseitenelemente sollen insbesondere Seitenelemente für Kippbrückenunterbauten, also Kippbrückenunterbau-Seitenelemente, fallen, die vorzugsweise mit Mitteln zur Anbringung von Seitenwänden versehen oder präparierbar sind.

Die Erfindung basiert auf der Überlegung, dass die Varianz bei der geforderten Vielfalt von Kippbrücken vornehmlich durch Elemente begründet ist, die sich an den Randbereichen der fertigen Kippbrücken befinden, wohingegen relativ große Basisbereiche, insbesondere Bodenbereiche, der diversen Kippbrückenvarianten kaum Unterschiede aufweisen müssen. Diese Überlegung führte erfindungsgemäß dazu, diese Basisbereiche als Kippbrückenunterbau-Basismodule einheitlicher Art zu standardisieren und gesondert als Bausatzelemente zu fertigen. Je nach Kundenwunsch kann das Kippbrückenunterbau-Basismodul dann mit weiteren vorgefertigten Bausatzelementen, nämlich insbesondere mit einem Satz von Kippbrückenseitenelementen und weiteren Teilen, wie Vorderwand und Rückwand, ausgestattet werden, um die jeweils bestellte, individuelle Kippbrücke nach dem Baukastenprinzip zusammenzusetzen. Es ist somit unter Verwendung erfindungsgemäßer Bausatzgruppen möglich, ein rationelles Herstellungsverfahren für Kippbrückenunterbauten bzw. Kippbrücken durchzuführen.

Es ist auf wirtschaftlich relativ günstige Weise möglich, die vorzugsweise identisch aufgebauten Kippbrückenunterbau-Basismodule nach Bedarfslage in hinreichend großer Anzahl auf Vorrat zu produzieren. Entsprechendes gilt für die jeweiligen Kippbrückenseitenelemente. Auf eine Bestellung einer bestimmten Kippbrücke kann dann vergleichsweise schnell reagiert werden, indem ein Kippbrückenunterbau-Basismodul mit einem den Kippbrückenunterbau entsprechend der Bestellung individualisierenden Satz von Kippbrückenseitenelementen und ggf. weiteren Kippbrückenelementen versehen wird. Die Verwendung von Bausatzgruppen nach der Erfindung ermöglicht somit einen sowohl logistisch als auch lagerhalterungstechnisch einfacheren Herstellungsprozess für Kippbrücken.

Vorzugsweise werden die Kippbrückenseitenelemente als Sätze von Kippbrückenseitenelementen bereitgestellt, wobei jeder Satz wenigstens zwei Kippbrückenseitenelemente umfasst, die zur Anbringung an einander entgegengesetzten seitlichen Enden des Kippbrückenunterbau-Basismoduls vorbereitet sind. Vorzugsweise sind die Kippbrückenunterbau-Basismodule und die Kippbrückenseitenelemente mit Positionierungsanschlägen und/oder mit Befestigungslaschen oder dergleichen versehen, die im montierten Zustand einer betreffenden Kippbrücke einander zugeordnete Befestigungsmittel bzw. Befestigungshilfsmittel darstellen.

Gemäß einer Variante der Erfindung ist es vorgesehen, dass die Kippbrückenseitenelemente wenigstens eines Satzes von Kippbrückenseitenelementen an ein Kippbrückenunterbau-Basismodul mittels Schraubenelementen anschraubbar sind. Einander zuzuordnende Befestigungslaschen des betreffenden Kippbrückenunterbau-Basismoduls und der jeweiligen Kippbrückenseitenelemente können gemäß einer Weiterbildung der Erfindung mit Löchern für die Durchführung gemeinsamer Befestigungsschrauben präpariert sein. Die Schraubbefestigung stellt eine mögliche Befestigungsart dar, die ein bedarfsweises Lösen der Kippbrückenseitenelemente von dem Kippbrückenunterbau-Basismodul, etwa zu Austauschzwecken, ermöglicht. Ferner können die miteinander durch Schrauben zu verbindenden Bausatzelemente als jeweils bereits fertig lackierte Elemente zusammengebaut werden, so dass eine Endlackierung des gesamten Kippbrückenunterbaus unterbleiben kann.

Die vorliegende Erfindung ist jedoch nicht durch die spezielle Art der Befestigung der Kippbrückenseitenelemente an dem Kippbrückenunterbau-Basismodul beschränkt. In einer Ausgestaltung der Erfindung können die Kippbrückenseitenelemente und das Kippbrückenunterbau-Basismodul für eine gemeinsame Verbindung durch Schweißen vorbereitet sein, wobei vorbestimmte Verbindungsflächen, etwa an Verbindungslaschen der Kippbrückenseitenelemente und des Kippbrückenunterbau-Basismoduls vorgesehen sein können, die durch eine Schweißnaht bzw. durch Schweißpunkte miteinander verbunden werden. Denkbar sind auch Nietbefestigungen oder Abwandlungen von Nietbefestigungen zur Herstellung einer fixierten Verbindung zwischen Kippbrückenunterbau-Basismodul und Kippbrückenseitenelementen.

Es ist gemäß einer weiteren Ausführungsform der Erfindung vorteilhaft, die Kippbrückenunterbau-Basismodule und die Kippbrückenseitenelemente und ggf. weitere Bausatzelemente mit aneinander angepassten, komplementären Elementen zur Herstellung von formschlüssigen Verbindungen, etwa Steckverbindungselementen und/oder Profilschienenbefestigungsmitteln, zu versehen, die zumindest eine provisorische Befestigung der Kippbrückenseitenelemente an dem Kippbrückenunterbau-Basismodul in der gewünschten Lagebeziehung zueinander ermöglichen und das Verschrauben oder/und Nieten oder/und Schweißen oder/und Verkleben etc. zur Herstellung der Dauerverbindung erleichtern. Gegebenenfalls reicht eine formschlüssige Profilschienen-Steckverbindung oder Nutschienenbefestigung oder dgl. schon aus, um Seitenelemente oder ggf. andere Bausatzelemente hinreichend sicher auf Dauer mit dem Basismodul zu verbinden.

Gemäß einer besonders bevorzugten Ausgestaltung der Erfindung ist es vorgesehen, dass zumindest einige Sätze von Kippbrückenseitenelementen Kippbrückenseitenelemente enthalten, welche Bodenrandabschnitte umfassen, die mit dem Bodenbereich eines Kippbrückenunterbau-Basismoduls zu einem Kippbrückenboden zu vereinigen sind, wobei die Bodenrandabschnitte im Endmontagezustand Teile der Ladefläche der Kippbrücke bilden. Die Bodenrandabschnitte unterschiedlicher Sätze von Kippbrückenseitenelementen können unterschiedliche Breitenabmessungen aufweisen, so dass mit einheitlich aufgebauten Kippbrückenunterbau-Basismodulen und unterschiedlichen Sätzen von Kippbrückenseitenelementen verschieden breite Kippbrücken und entsprechend verschieden großen Ladeflächen realisiert werden können. In entsprechender Weise kann mit Bausatzelementen eine Längenanpassung von Kippbrückenunterbauten erreicht werden. Bei den letztgenannten Bausatzelementen kann es sich z.B. um vordere oder hintere Kippbrückenseitenelemente bzw. Kippbrückenunterbauseitenelemente handeln, beispielsweise in Form von vorderen oder hinteren Abschlussleisten des Kippbrückenunterbaus, wobei die Abschlussleisten unterschiedlich bemessene Bodenrandabschnitte haben können, die mit dem Bodenbereich des Basismoduls zu einem Kippbrückenboden zu vereinigen sind. Die Erfindung ermöglicht somit auf einfache Weise die rationelle Herstellung von Kippbrückenunterbauten bzw. Kippbrücken mit unterschiedlichen Ladeflächenabmessungen, jedoch unter Verwendung einheitlicher Kippbrückenunterbau-Basismodule.

Des Weiteren wird vorgeschlagen, dass sich die Kippbrückenseitenelemente unterschiedlicher Sätze von Kippbrückenseitenelementen durch unterschiedliche Vorrichtungen zur Fixierung oder/und gelenkigen Lagerung von Kippbrückenseitenwänden unterscheiden. Damit wird die Möglichkeit eröffnet, unter Verwendung einheitlicher Kippbrückenunterbau-Basismodule Kippbrückenunterbauten bzw. Kippbrücken mit bedarfsweise unterschiedlichen Halterungselementen für Seitenwände und ggf. Rückwände oder Vorderwände zu fertigen. Die Kippbrückenseitenelemente können diesbezüglich mit Lagerelementen ausgerüstet sein, welche ein Abklappen der zugeordneten Kippbrückenseitenwand um eine kippbrückenbodennahe Schwenkachse ermöglichen.

Im Falle einer Kippbrücke mit einer sog. "pendelnden" Seitenwand, die in einem entriegelten Zustand bei einem seitlichen Kippvorgang um eine Pendelachse pendeln kann, können die zur Herstellung des Kippbrückenunterbaus mit dem Kippbrückenunterbau-Basismodul zu vereinigenden Kippbrückenseitenelemente mit Verriegelungsmitteln ausgestattet sein, welche dazu dienen, die Seitenwand an deren unteren Ende am Fahrzeug zu verriegeln, so dass sie nicht um ihre Pendelachse verschwenkt werden kann. In entsprechender Weise kann es im Rahmen der Erfindung vorgesehen sein, dass heckseitige Kippbrückenseitenelemente zur Bausatzgruppe gehören, die entsprechend der jeweils gewünschten Art der Rückwand der Kippbrücke angepasst sind.

Die Bausatzgruppe nach der Erfindung kann ferner Kipplagerbaugruppen zur Anbringung an das Kippbrückenunterbau-Basismodul umfassen. Bei diesen Kipplagerbaugruppen handelt es sich vorzugsweise um Querträger mit daran angeordneten Kippgabeln, die zur Ineingriffnahme von Kippwellen bzw. Kippbolzen am Chassis des Kipperfahrzeugs vorgesehen sind.

Die Bausatzgruppe kann ferner Adapterelemente, etwa Konsolenelemente, umfassen, welche unterschiedliche Möglichkeiten der Anbringung der Kipplagerbaugruppen am Kippbrückenunterbau eröffnen. Eine solche Varianz der Möglichkeiten zur Anordnung der Kipplagerbaugruppen und somit Positionierung der Kippgabeln am Kippbrückenunterbau wird dazu genutzt, die Kippbrückenunterbauten hinsichtlich der Kipplagerpunkte den Vorgaben anzupassen, die durch unterschiedliche Chassis bzw. unterschiedliche Rahmenaufbauen der Fahrzeuge bedingt sind, die mit den Kippbrücken ausgestattet werden sollen.

Die Modulbauweise einer erfindungsgemäß hergestellten Kippbrücke ermöglicht einen einfach und schnell durchzuführenden Austausch betreffender Kippbrückenseitenelemente bzw. Bausatzelemente, so dass Reparaturarbeiten oder ggf. bedarfsweise Umbauarbeiten an der Kippbrücke schnell und einfach durchgeführt werden können.

Im Rahmen der Erfindung sind zahlreiche Varianten bezüglich der Gestaltung und Zusammenstellung der Elemente der jeweiligen Bausatzgruppe möglich. Hierzu nur einige Beispiele:

Kippbrückenseitenelemente können mit daran bereits angeordneten Seitenwänden versehen sein. Denkbar sind Kippbrückenseitenelemente mit daran starr fixierten Seitenwänden oder Kippbrückenseitenelemente mit schwenkbar daran gelagerten Seitenwänden. So können zum Zusammenbau mit den betreffenden einheitlichen Kippbrückenunterbau-Basismodulen verschiedene Kombinationen von Kippbrückenseitenelementen mit Seitenwand und Kippbrückenseitenelementen ohne Seitenwand vorgesehen sein, etwa um Kippbrücken zu realisieren, bei denen z.B. nur einige - aber nicht alle - Seitenwände starr fixiert am Kippbrückenunterbau vorgesehen sind, wohingegen die übrigen Seitenwände abklappbar oder/und zu Pendelbewegungen freigebbar sind. Auf diese Weise kann z.B. eine Kippbrücke hergestellt werden, bei der die vordere Stirnwand und die Rückwand feststehend ausgebildet sind, wohingegen die Lateral-Seitenwände gelenkig anzuordnen sind.

Es soll im Rahmen der Erfindung auch nicht ausgeschlossen sein, dass Kippbrückenunterbau-Basismodule an einer oder mehreren Seiten bereits mit einer Seitenwand ausgestattet sind, z.B. mit einer feststehenden vorderen Seitenwand.

In herstellungstechnischer Hinsicht bietet die Erfindung auch den Vorteil, dass die Kippbrückenunterbau-Basismodule und die Kippbrückenseitenelemente sowie sonstige Bausatzelemente von Kippbrückenunterbauten bzw. von Kippbrücken bereits fertig lackiert für den Zusammenbau von Kippbrücken bereitgestellt werden können. So ist es beispielsweise möglich, dass Kippbrücken mit einheitlich lackierten Kippbrückenunterbau-Basismodulen je nach Bestellung mit individuell lackierten oder beschrifteten Kippbrückenseitenelementen und -seitenwänden ausgestattet werden.

Eine Endlackierung des gesamten Kippbrückenunterbaus bzw. der gesamten Kippbrücke kann damit entfallen, was die Herstellungskosten mindert.

Gegenstand der Erfindung ist ferner eine Kippbrücke, hergestellt mit einem Bausatz aus einer Bausatzgruppe gemäß einem der Ansprüche 7 - 19.

Die Erfindung betrifft auch ein Kippbrückenunterbau-Basismodul für eine Bausatzgruppe nach einem der Ansprüche 7 - 19 mit Befestigungs- und/ oder Anschlagmitteln zur Anbringung von entsprechend angepassten Kippbrückenseitenelementen.

Die Erfindung wird nachstehend unter Bezugnahme auf die Figuren beispielhaft näher erläutert.
- Fig. 1: zeigt in einer schematisierten Darstellung die Anordnung einer Kippbrücke (ohne Seitenwände) auf einem Rahmen eines Kipperfahrzeugs in Seitenansicht:
- Fig. 2: zeigt in einer perspektivischen Darstellung einen Bausatz einer Bausatzgruppe nach der Erfindung zur Herstellung eines Kippbrückenunterbaus nach dem erfindungsgemäßen Verfahren.
- Fig. 3: zeigt einen aus einem Kippbrückenunterbau-Basismodul und Kippbrückenseitenelementen zusammengesetzten Kippbrückenunterbau in einer perspektivischen Darstellung von unten.
- Fig. 4: zeigt in schematischen Profildarstellungen bzw. Teilschnittdarstellungen mit Schnittebene quer zur Kippbrückenlängsachse verschiedene Varianten von Kippbrücken mit unterschiedlichen Kippbrückenseitenelementen und einheitlichen (nur teilweise dargestellten) Kippbrückenunterbau-Basismodulen.
- Fig. 5: zeigt in perspektivischer Darstellung einen hinteren Eckbereich eines Kippbrückenunterbaus mit Seitenwand und eine Ecksäule zur Anbringung an den Kippbrückenunterbau.

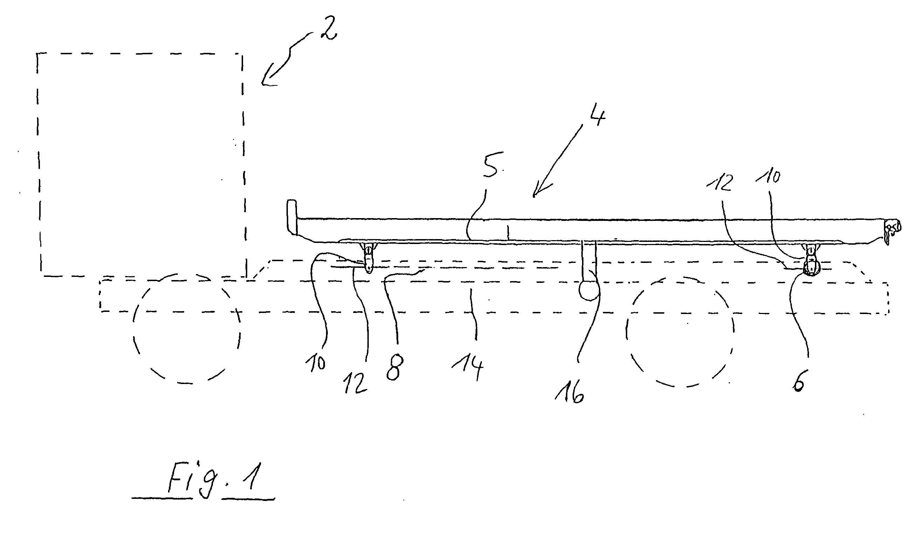

In Fig. 1 ist ein Kipperfahrzeug 2 mit auf dem Fahrzeugchassis angeordneter Kippbrücke 4 angedeutet, wobei die Kippbrücke 4 ohne Seitenwände, ohne Vorderwand und ohne Rückwand dargestellt worden ist. Die Kippbrücke 4 ist im Beispielsfall der Fig. 1 für einen Dreiseitenkipper bestimmt und wahlweise um eine quer zur Fahrzeuglängsrichtung verlaufende hintere Kippachse 6 oder um eine jeweilige in Fahrzeuglängsrichtung verlaufende Seitenkippachse 8 kippbar. Die jeweilige Seitenkippachse 8 ist durch Seitenkipplager definiert, welche jeweils eine Seitenkippgabel 10 am Kippbrückenunterbau 5 und einen von der Seitenkippgabel 10 in Eingriff genommenen Kippbolzen oder Kippzapfen 12 am Fahrzeugchassis 14 umfassen. Die Kippgabeln 10 und Kippbolzen 12 können bedarfsweise miteinander verriegelt oder entriegelt werden, um den jeweiligen gewünschten Kippfreiheitsgrad einzustellen, wie dies bei herkömmlichen Dreiseitenkippern üblich ist.

Als Kippantrieb dient in an sich bekannter Weise eine hydraulische Kipperpresse 1 6, die sich einerseits am Fahrzeugchassis und andererseits an der Unterseite des Kippbrückenunterbaus 5 abstützt.

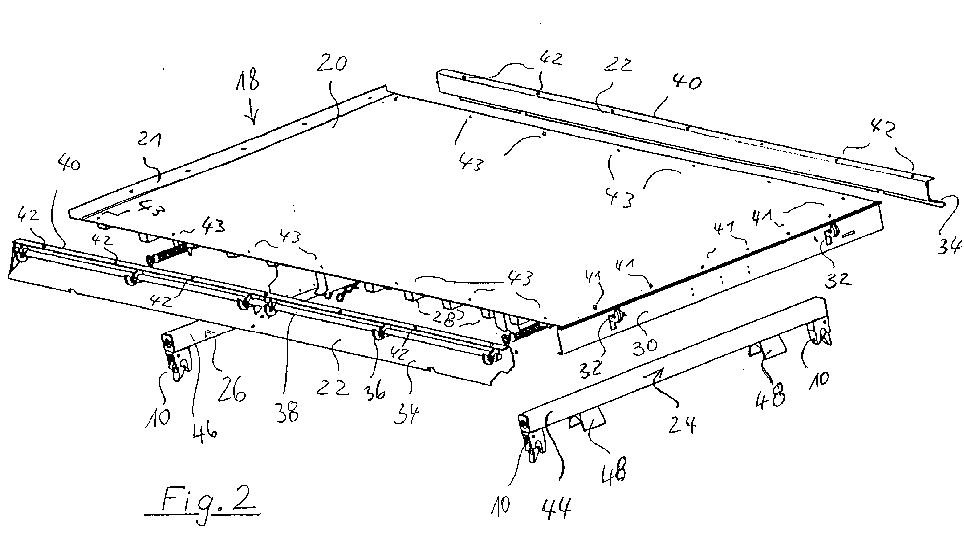

Fig. 2 zeigt Elemente eines Bausatzes einer erfindungsgemäßen Bausatzgruppe zur Herstellung von Kippbrücken bzw. Kippbrückenunterbauten 5. Der Bausatz umfasst ein Kippbrückenunterbau-Basismodul 18 mit einer Kippbrückenbodenplatte 20, zwei Kippbrückenseitenelemente 22, eine hintere Kipplagerbaugruppe 24 und eine vordere Kipplagerbaugruppe 26.

Im Beispielsfall besteht das Kippbrückenunterbau-Basismodul 18 aus der Bodenplatte 20 und einem Träger- und Aussteifungsgerüst aus Längsträgern und Querträgern 28. Bereits montiert ist am hinteren Ende des Bodenbleches 20 die hintere Abschlussleiste 30 mit Öffnungen für die ebenfalls bereits montierten Klauen 32 für eine Rückwandverriegelung. Insbesondere falls unterschiedliche Abschlussleisten 30 für die Produktion einer Kippbrückenmodellpalette bereitzustellen sind, werden vorzugsweise auch die Abschlussleisten 30 als Bausatzelemente mit entsprechenden Varianten gefertigt und zum Anbau an das Basismodul 18 passend präpariert. Im Beispielsfall der Fig. 2 ist die hintere Abschlussleiste 30 an den Befestigungspunkten 41 mit dem Basismodul 18 verschraubt. In ähnlicher Weise ist ein vorderes Kippbrückenseitenelement 21 mit dem Basismodul 18 verbunden.

Die Kippbrückenseitenelemente 22 weisen einen Schüttleistenabschnitt 34 für die seitliche Ableitung von Schüttgut auf. Die Kippbrückenseitenelemente 22 weisen ferner vormontierte Verriegelungsklauen 36 an einem den Verriegelungsklauen 36 gemeinsamen Betätigungsgestänge 38 auf. Die Verriegelungsklauen 36 dienen zur Verriegelung betreffender Kippbrückenseitenwände (nicht gezeigt) an dem Kippbrückenunterbau. Die beiden gezeigten Kippbrückenseitenelemente 22 bilden einen Satz von KippbrüKkenseitenelementen, die hinsichtlich ihrer Formen und Abmessungen passend zur Verbindung mit dem Kippbrückenunterbau-Basismodul 18 vorbereitet sind.

Im Beispielsfall der Fig. 2 weisen die Kippbrückenseitenelemente 22 obere Befestigungsleisten 40 mit darin vorgesehenen Löchern 42 für Senkkopf-Befestigungsschrauben auf, welche die Seitenelemente 22 an dem Kippbrückenunterbau-Basismodul 18 fixieren sollen. Die entsprechenden Aufnahmelöcher für die Schrauben im Basismodul 18 sind in Fig. 2 mit 43 gekennzeichnet. Im montierten Zustand befinden sich die Befestigungsleisten 40 der Seitenelemente 22 unter der Bodenplatte 20, so dass ein Überlapp zwischen dem jeweiligen Seitenrand der Bodenplatte 20 und der zugeordneten Befestigungsleiste 40 gegeben ist. Die einander zugeordneten Schraublöcher 42, 43 liegen dabei in Flucht und sind von einer Befestigungsschraube durchsetzt. Die Kippbrückenseitenelemente 22 sind somit mittels Befestigungsschrauben lösbar mit dem Kippbrückenunterbau-Basismodul 18 verbindbar.

Abweichend von dem Beispiel nach Fig. 2 könnte auch eine andere Befestigungsart zur Fixierung der Kippbrückenseitenelemente 22 an dem Kippbrückenunterbau-Basismodul 18 in Frage kommen, etwa eine Nietbefestigung oder eine Schweißbefestigung.

Insbesondere im Falle der Schraubbefestigung oder/und im Falle der Nietbefestigung kann man fertig lackierte Kippbrückenseitenelemente oder/und Kippbrückenunterbau-Basismodule heranziehen, um einen Kippbrückenunterbau herzustellen.

Anstelle der in Fig. 2 gezeigten Kippbrückenseitenelemente 22 könnte bedarfsweise ein vorbereiteter anderer Satz von Kippbrückenseitenelementen zum Zusammenbau mit dem Kippbrückenunterbau-Basismodul 18 herausgesucht werden.

Die Kipplagerbaugruppen 24, 26 umfassen jeweils einen Querholm 44 bzw. 46, welcher an seinen Längsenden Kippgabeln 10 für Seitenkipplager aufweist. Die hintere Kipplagerbaugruppe 24 weist ferner Gabeln 48 für eine heckseitige Kippwelle (vgl. Position 6 in Fig. 1) auf. Mittels nicht gezeigter Adapterelemente können die Kipplagerbaugruppen 24, 26 an der Unterseite des Kippbrückenunterbau-Basismoduls 18 angebracht werden. Die Adapterelemente, etwa Konsolen, erlauben eine gewisse Varianz, was die Positionierung der jeweiligen Baugruppe 24, 26 relativ zu dem Kippbrückenunterbau-Basismodul 18 anbelangt. Auf diese Weise kann dem Umstand Rechnung getragen werden, dass bei unterschiedlichen Fahrzeugchassistypen die für die Kippgabeln 10 vorgesehenen Gegenlagerelemente (Kippbolzen) in ihren Positionen in bestimmten Grenzen variieren können.

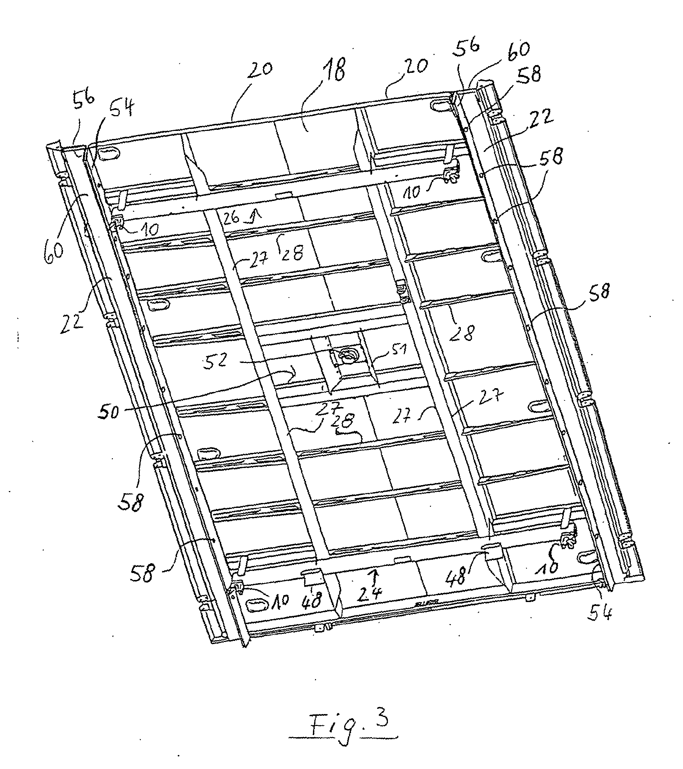

Fig. 3 zeigt einen Kippbrückenunterbau, der aus einem Bausatz einer Bausatzgruppe nach der Erfindung hergestellt worden ist. Fig. 3 zeigt den Kippbrückenunterbau in einer Ansicht von unten. Elemente in Fig. 3, die mit Elementen aus Fig. 2 gleichzusetzen sind, sind mit entsprechend korrespondierenden Bezugszeichen gekennzeichnet.

In Fig. 3 erkennt man das Kippbrückenunterbau-Basismodul 18 mit einem Träger- und Aussteifungsgerüst aus Längsträgern 27 und Querträgern 28. Auf dem Aussteifungsgerüst 27, 28 befindet sich die Kippbrückenbodenplatte 20.

Die in das Träger- und Aussteifungsgerüst 27, 28 integrierte Kopftraverse 50 weist eine Halterung für die Kugelgelenkpfanne 52 für die gelenkige Lagerung des oberen Endes einer betreffenden Kipperpresse (vgl. Position 16 in Fig. 1).

An den Seitenrändern des Kippbrückenunterbau-Basismoduls 18 befinden sich nach unten abgewinkelte Befestigungsschenkel 54, die mit daran angepassten Befestigungsschenkeln 56 der in Montageanordnung an dem Kippbrückenunterbau-Basismodul 18 vorgesehenen Kippbrückenseitenelementen 22 in Verbindung stehen. Bei 58 sind an den Schenkeln 54, 56 jeweilige Befestigungspunkte angedeutet, an denen die Kippbrückenseitenelemente 22 an dem Kippbrückenunterbau-Basismodul 18 angeschraubt sind.

Im Beispielsfall der Fig. 3 weisen die Kippbrückenseitenelemente 22 einen jeweiligen Bodenbereich 60 auf. Die beiden Bodenbereiche 60 schließen sich an den seitlichen Enden der Bodenplatte 20 des Kippbrückenunterbau-Basismoduls 18 an und bilden zusammen mit dem Bodenblech 20 den Kippbrückenboden. Die Bodenbereiche 60 unterschiedlicher Sätze von Kippbrückenseitenelementen 22 können unterschiedliche Breiten aufweisen, so dass durch entsprechende Wahl des Satzes von Kippbrückenseitenelementen 22 die Breite des Kippbrückenbodens bedarfsweise variiert werden kann.

Fig. 3 zeigt ferner die hintere Kipplagerbaugruppe 24 mit Kippgabeln 10 und 48 sowie die vordere Kipplagerbaugruppe 26 mit Kippgabeln 10.

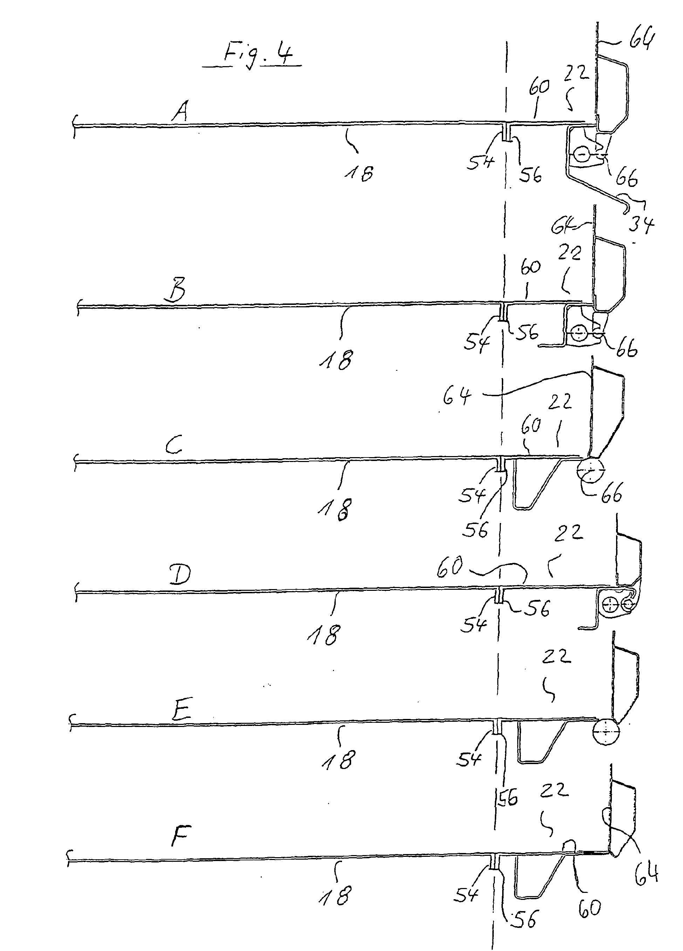

In Fig. 4 ist veranschaulicht, wie einheitliche Kippbrückenunterbau-Basismodule 18 mit unterschiedlichen Kippbrückenseitenelementen 22 kombinierbar sind. Es sind insgesamt sechs Beispiele in Fig. 4 gezeigt, von denen das Beispiel A einen Teil einer Kippbrücke zeigt, bei der eine Kippbrückenseitenwand 64 um eine Schwenkachse 66 in Kippbrückenbodennähe abklappbar oder um eine (nicht gezeigte) obere Pendelachse schwenkbar ist. Das Kippbrückenseitenelement 22 des Beispiels A in Fig. 4 umfasst Lager- und Verriegelungselemente (nicht gezeigt) für die Seitenwand 64. Ferner weist das Kippbrückenseitenelement 22 gemäß Beispiel A eine Schüttleiste 34 auf.

Das Beispiel B in Fig. 4 betrifft eine Kippbrücke, bei der die Seitenwand 64 um die Schwenkachse 66 abklappbar ist. Die unter Bezugnahme auf das Beispiel A beschriebene Pendelmöglichkeit der Seitenwand ist in dem Beispiel B nicht gegeben.

Das Beispiel C repräsentiert eine Kippbrücke, bei der die Seitenwand 64 motorisch angetrieben um die Achse 66 verschwenkt werden kann.

Das Beispiel D in Fig. 4 betrifft eine Variante des Beispiels B, wobei der Kippbrückenboden im Beispiel D eine größere Breite hat als im Beispiel B. Die unterschiedlichen Breiten der Kippbrückenböden resultieren aus den unterschiedlichen Breiten der Bodenbereiche 60 der Kippbrückenseitenelemente 22.

Das Beispiel E zeigt eine in entsprechender Weise verbreiterte Version des Beispiels C.

Das Beispiel F in Fig. 4 betrifft eine Kippbrücke, bei der das mit dem Kippbrückenunterbau-Basismodul 18 verbundene Kippbrückenseitenelement 22 mit einer starr daran fixierten Seitenwand 64 ausgestattet ist. Im Beispiel F gemäß Fig. 4 umfasst das Seitenelement 22 somit einen Bodenbereich 60 und die Seitenwand 64.

Miteingezeichnet in Fig. 4 sind Befestigungsschenkel 54, 56 zur Verbindung des Kippbrückenseitenelementes 22 mit dem Kippbrückenunterbau-Basiselement 18.

Mittels der erfindungsgemäßen Bausatzgruppe ist eine rationellere Fertigung unterschiedlicher Kippbrückenunterbauten möglich. Die einheitlichen Kippbrückenunterbau-Basiselemente 18 und die jeweiligen Sätze von Kippbrückenseitenelementeri 22 können vorgefertigt und schließlich bestellungsgemäß montiert werden, um betreffende Varianten an Kippbrückenunterbauten bzw. Kippbrücken bereitzustellen.

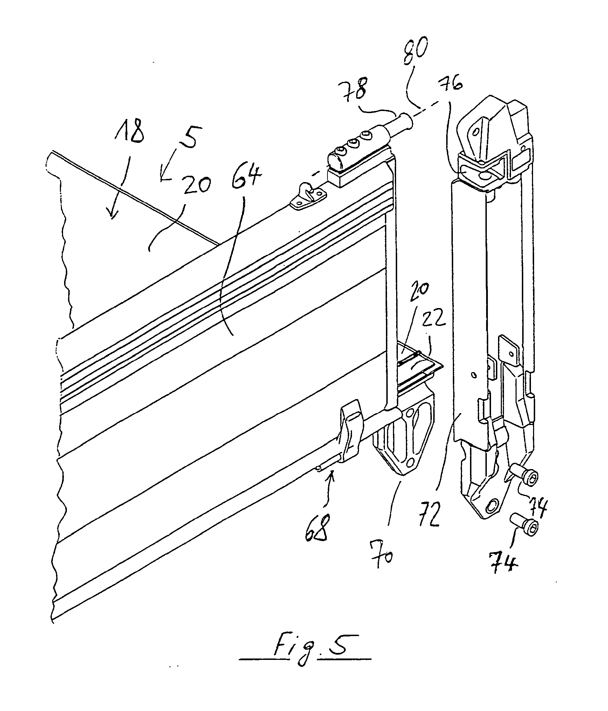

Fig. 5 zeigt den hinteren Eckbereich eines Kippbrückenunterbaus 5 mit einer Seitenwand 64. Die Seitenwand 64 ist mittels Gelenkanordnungen 68 schwenkbeweglich abklappbar an dem Kippbrückenseitenelement 22 gelagert. Das Kippbrückenseitenelement 22 ist im Beispielsfall der Fig. 5 mit einer Halterungsanordnung 70 für eine Ecksäule 72 versehen. Die Halterungsanordnung 70 und die Ecksäule 72 sind Bausatzelemente eines Bausatzes nach der Erfindung. Die Ecksäule 72 (Eckrunge 72) ist mittels Schrauben 74 an der Halterungsanordnung 70 fixierbar und weist an ihrem oberen Ende eine Aufnahme 76 mit Verriegelungsmitteln für einen Verriegelungsbolzen 78 der Seitenwand 64 auf. Wie bei Kippbrücken an sich bekannt, können die Aufnahme 76 und der Verriegelungsbolzen 78 zusammen ein Pendellager für Pendelbewegungen der Seitenwand 64 um eine obere Pendelachse 80 bilden. Ein solches Pendeln der Seitenwand 64 erfolgt bei seitlichen Kippvorgängen der Kippbrücke nach bedarfsweiser Entriegelung der Seitenwand an ihren Gelenkverbindungen 68.

Das Beispiel gemäß Fig. 5 zeigt, dass außer den mit dem Kippbrückenunterbau-Basismodul 18 unmittelbar zu verbindenden Kippbrückenseitenteilen 22 noch weitere Bausatzelemente, wie beispielsweise die Ecksäule 72, die Seitenwand 64, die Halterungsanordnung 70 etc., zu einem Bausatz der Bausatzgruppe nach der Erfindung gehören können. Falls die Kippbrücke an einer Seite eine geteilte Seitenwand aufweisen soll, so können z.B. auch Mittelsäulen und ggf. vordere Ecksäulen mit betreffenden Halterungsanordnungen als Bausatzelemente vorgesehen sein.

Für verschiedene Kippbrücken können dann in der Bausatzgruppe für einheitliche Kippbrückenunterbau-Basismodule 18 unterschiedlich ausgebildete Säulen 72 und/oder unterschiedlich ausgebildete Seitenwandelemente 64 vorgesehen sein.

Die Bausatzgruppe nach der Erfindung ermöglicht somit ein vereinfachtes Herstellungsverfahren von Kippbrückenunterbauten bzw. Kippbrücken.

## Patentansprüche

1. Verfahren zur Herstellung von mehreren, unterschiedlichen Kippbrückenunterbauten bzw. Kippbrücken für Kipperfahrzeuge, **gekennzeichnet durch** folgende Schritte:
a) Bereitstellen von mehreren, im Wesentlichen einheitlichen Kippbrückenunterbau-Basismodulen (18),
b) Bereitstellen von unterschiedlichen Kippbrückenseitenelementen (22) und ggf. weiteren Kippbrücken-Bausatzelementen,
c) Auswahl der mit einem jeweiligen Kippbrückenunterbau-Basismodul (18) zu einem Kippbrückenunterbau zu vereinigenden Kippbrückenseitenelemente (22) und ggf. von weiteren Bausatzelementen nach Maßgabe einer gewünschten Kippbrücke,
d) Anbau der ausgewählten Seitenelemente (22) und der ggf. weiteren Bausatzelemente an das betreffende Kippbrückenunterbau-Basismodul (18),
e) Wiederholung der Schritte c) und d).

2. Verfahren nach Anspruch 1,
**dadurch gekennzeichnet,**
**dass** der Schritt der Bereitstellung von unterschiedlichen Kippbrückenseitenelementen (22) das Bereitstellen von Sätzen von Kippbrückenseitenelementen (22) umfasst, zu denen jeweils wenigstens zwei Kippbrückenseitenelemente (22) gehören, die zur Anbringung an einander entgegengesetzten seitlichen Enden eines Kippbrückenunterbau-Basismoduls (18) vorbereitet sind.

3. Verfahren nach Anspruch 1 oder 2,
**dadurch gekennzeichnet,**
**dass** man Kippbrückenseitenelemente (22) verwendet, die Bodenrandabschnitte (60) aufweisen, welche mit dem Bodenbereich (20) eines Kippbrückenunterbau-Basismoduls (18) zu einem Kippbrückenboden zu vereinigen sind.

4. Verfahren nach Anspruch 3,
**dadurch gekennzeichnet,**
**dass** die Bodenrandabschnitte (60) unterschiedlicher Sätze von Kippbrückenseitenelementen (22) unterschiedliche Breitenabmessungen aufweisen.

5. Verfahren nach einem der vorhergehenden Ansprüche,
**dadurch gekennzeichnet,**
**dass** jeweilige Kippbrückenseitenelemente (22) lösbar mit dem zugeordneten Kippbrückenunterbau-Basismodul (18) verbunden werden.

6. Verfahren nach einem der vorhergehenden Ansprüche,
**dadurch gekennzeichnet,**
**dass** die Kippbrückenseitenelemente (22) wenigstens eines Satzes von Kippbrückenseitenelementen an ein zugeordnetes Kippbrückenunterbau-Basismodul (18) mittels Schraubenelementen angeschraubt oder/und mittels Nietelementen angenietet werden.

7. Bausatzgruppe für die Herstellung von Kippbrücken für Kipperfahrzeuge insbesondere nach dem Verfahren gemäß wenigstens einem der vorhergehenden Ansprüche,
**gekennzeichnet durch**
mehrere, im Wesentlichen einheitlich aufgebaute Kippbrückenunterbau-Basismodule (18), die jeweils einen Kippbrückenbodenbereich (20) aufweisen und zur Anbringung wahlweise unterschiedlicher Kippbrückenseitenelemente (22) vorbereitet sind,
und ferner **gekennzeichnet durch**
unterschiedliche Kippbrückenseitenelemente (22), wobei die Kippbrückenseitenelemente (22) passend zum Zusammenbau mit dem Kippbrückenunterbau-Basismodul (18) ausgebildet sind.

8. Bausatzgruppe nach Anspruch 7,
**dadurch gekennzeichnet,**
**dass** Sätze von Kippbrückenseitenelementen (22) jeweils wenigstens zwei Kippbrückenseitenelemente (22) umfassen, die zur Anbringung an einander entgegengesetzten seitlichen Enden des Kippbrückenunterbau-Basismoduls (18) vorbereitet sind.

9. Bausatzgruppe nach Anspruch 7 oder 8,
**dadurch gekennzeichnet,**
**dass** die Kippbrückenseitenelemente (22) Bodenrandabschnitte (60) umfassen, die mit dem Bodenbereich (20) eines Kippbrückenunterbau-Basismoduls (18) zu einem Kippbrückenboden zu vereinigen sind.

10. Bausatzgruppe nach Anspruch 9,
**dadurch gekennzeichnet,**
**dass** die Bodenrandabschnitte (60) unterschiedlicher Sätze von Kippbrückenseitenelementen (22) unterschiedliche Breitenabmessungen aufweisen.

11. Bausatzgruppe nach wenigstens einem der Ansprüche 7 - 10,
**dadurch gekennzeichnet,**
**dass** wenigstens einige Kippbrückenseitenelemente (22) Schüttleisten (34) zur Abführung von Schüttgut umfassen.

12. Bausatzgruppe nach wenigstens einem der Ansprüche 7 - 11,
**dadurch gekennzeichnet,**
**dass** sich die Kippbrückenseitenelemente (22) unterschiedlicher Sätze von Kippbrückenseitenelementen durch unterschiedliche Vorrichtungen zur Fixierung oder/und gelenkigen Lagerung von Kippbrückenseitenwänden (64) unterscheiden.

13. Bausatzgruppe nach wenigstens einem der Ansprüche 7 - 12,
**dadurch gekennzeichnet,**
**dass** die Kippbrückenseitenelemente (22) lösbar mit einem Kippbrückenunterbau-Basismodul (18) verbindbar sind.

14. Bausatzgruppe nach wenigstens einem der Ansprüche 7 - 13,
**dadurch gekennzeichnet,**
**dass** die Kippbrückenseitenelemente (22) wenigstens eines Satzes von Kippbrückenseitenelementen an ein Kippbrückenunterbau-Basismodul (18) mittels Schraubenelementen anschraubbar sind.

15. Bausatzgruppe nach wenigstens einem der Ansprüche 7 - 14,
**dadurch gekennzeichnet,**
**dass** die Kippbrückenunterbau-Basismodule (18) und die Kippbrückenseitenelemente (22) wenigstens eines Satzes von Kippbrückenseitenelementen mit aneinander angepassten Befestigungselementen (54, 56) versehen sind.

16. Bausatzgruppe nach wenigstens einem der Ansprüche 7 - 15,
**gekennzeichnet durch**
Kipplagerbaugruppen (24, 26) zur Anbringung an das Kippbrückenunterbau-Basismodul (18).

17. Bausatzgruppe nach Anspruch 16,
**gekennzeichnet durch**
Adapterelemente zur variablen Anbringung der Kipplagerbaugruppen (24, 26) an das Kippbrückenunterbau-Basismodul (18).

18. Bausatzgruppe nach wenigstens einem der Ansprüche 7 - 17,
**gekennzeichnet durch**
Sätze von Befestigungsmitteln für die Montage von Kippbrückenseitenelementen (22) an Kippbrückenunterbau-Basismodulen (18).

19. Bausatzgruppe nach wenigstens einem der Ansprüche 7 - 18,
**dadurch gekennzeichnet,**
**dass** wenigstens ein Kippbrückenseitenelement (22) einen Basisbereich (60) mit einer daran angeordneten, insbesondere starr fixierten Seitenwand (64) aufweist.

20. Kippbrücke, hergestellt mit einem Bausatz aus einer Bausatzgruppe gemäß einem der Ansprüche 7 bis 19.

21. Kippbrückenunterbau-Basismodul für eine Bausatzgruppe nach einem der vorhergehenden Ansprüche 7 - 19 mit Mitteln zur Anbringung von Kippbrückenseitenelementen.

## Claims

1. Method for producing several, different dump bucket underframes or dump buckets for dumper trucks,
**characterised by** the following steps:
a) provision of several, substantially uniform dump bucket underframe-base modules (18),
b) provision of various different dump bucket side elements (22) and if necessary additional dump bucket assembly elements,
c) selection of dump bucket side elements (22) to be connected with a respective dump bucket underframe-base module (18) to form a dump bucket underframe and if necessary additional assembly elements depending on the dimensions of the desired dump bucket,
d) installation of the selected side elements (22) and any additional assembly elements onto the relevant dump bucket underframe-base module (18), .
e) repetition of steps c) and d).

2. Method according to claim 1,
**characterised in that**
the step for providing different dump bucket side elements (22) comprises providing sets of dump bucket side elements (22), to which respectively at least two dump bucket side elements (22) belong, which are prepared for attachment onto opposite side ends of a dump bucket underframe-base module (18).

3. Method according to claim 1 or 2,
**characterised in that**
dump bucket side elements (22) are used which have base edge sections (60) which are to be connected with the base region (20) of a dump bucket underframe-base module (18) to form a dump bucket base.

4. Method according to claim 3,
**characterised in that**
the base edge sections (60) have various different sets of dump bucket side elements (22) with different dimensions of width.

5. Method according to one of the preceding claims,
**characterised in that**
respective dump bucket side elements (22) are connected detachably with the allocated dump bucket underframe-base module (18).

6. Method according to one of the preceding claims,
**characterised in that**
the dump bucket side elements (22) at least of one set of dump bucket side elements are screwed onto an allocated dump bucket underframe-base module (18) by means of screw elements or/and riveted on by means of rivet elements.

7. Assembly group for producing dump buckets for dumper trucks in particular according to the method of at least one of the preceding claims,
**characterised by**
several, substantially uniformly designed dump bucket underframe-base modules (18), which each have a dump bucket base area (20) and are prepared for the optional attachment of various different dump bucket side elements (22),
and also **characterised by**
having different dump bucket side elements (22), whereby the dump bucket side elements (22) are suitably designed to connect with the dump bucket underframe-base module (18).

8. Assembly group according to claim 7,
**characterised in that**
sets of dump bucket side elements (22) comprise respectively at least two dump bucket side elements (22), which are provided for attachment onto opposite side ends of the dump bucket underframe-base module (18).

9. Assembly group according to claim 7 or 8,
**characterised in that**
the dump bucket side elements (22) comprise base edge sections (60) which are to be joined with the base area (20) of a dump bucket underframe-base module (18) to form a dump bucket base.

10. Assembly group according to claim 9,
**characterised in that**
the base edge sections (60) of different sets of dump bucket side elements (22) have different width dimensions.

11. Assembly group according to at least one of claims 7 - 10,
**characterised in that**
at least some dump bucket side elements (22) comprise pouring strips (34) for the removal of bulk material

12. Assembly group according to at least one of claims 7-11,
**characterised in that**
the dump bucket side elements (22) of different sets of dump bucket side elements differ by having different mechanisms for securing and/or hinge connecting dump bucket side walls (64).

13. Assembly group according to at least one of claims 7 - 12,
**characterised in that**
the dump bucket side elements (22) can be connected detachably to a dump bucket underframe-base module (18).

14. Assembly group according to at least one of claims 7 - 13,
**characterised in that**
the dump bucket side elements (22) of at least one set of dump bucket side elements can be screwed onto a dump bucket underframe-base module (18) by means of screw elements.

15. Assembly group according to at least one of claims 7 - 14,
**characterised in that**
the dump bucket underframe base module (18) and the dump bucket side elements (22) of at least one set of dump bucket side elements are provided with mutually fitted securing elements (54, 56).

16. Assembly group according to at least one of claims 7-15,
**characterised by**
dump bearing assembly groups (24, 26) for attachment onto the dump bucket underframe-base module 918).

17. Assembly group according to claim 16,
**characterised by**
adapter elements for the variable attachment of the dump bearing assembly groups (24, 26) onto the dump bucket underframe-base module (18).

18. Assembly group according to at least one of claims 7 - 17,
**characterised by**
sets of securing means for the assembly of dump bucket side elements (22) onto dump bucket underframe base modules (18).

19. Assembly group according to at least one of claims 7-18,
**characterised in that**
at least one dump bucket side element (22) comprises a base area (60) with a side wall (64) arranged thereon, in particular secured rigidly.

20. Dump bucket, produced by an assembly from an assembly group according to one of claims 7 -19.

21. Dump bucket underframe-base module for an assembly group according to one of the preceding claims 7 -19 with means for attaching dump bucket side elements.

## Revendications

1. Procédé de fabrication de plusieurs châssis de pont basculant différents et/ou de ponts basculants pour bennes basculantes **caractérisé par** les étapes suivantes consistant à :
a) disposer de plusieurs modules de base de châssis de pont basculant (18) essentiellement homogènes,
b) disposer de différents éléments latéraux de pont basculant (22) et le cas échéant d'autres éléments de modules de pont basculant
c) sélectionner des éléments latéraux de pont basculant (22) à assembler avec un module de base du châssis de pont basculant (18) correspondant à un châssis de pont basculant et le cas échéant sélectionner d'autres éléments de module conformément à un pont basculant souhaité,
d) ajouter des éléments latéraux (22) choisis et le cas échéant d'autres éléments de module au module de base du châssis de pont basculant (18),
e) répétition des étapes c) et d)

2. Procédé selon la revendication 1, **caractérisé en ce que** l'étape de la mise à disposition de différents éléments latéraux de pont basculant (22) comprend la mise à disposition de jeux d'éléments latéraux de pont basculant (22), dont font respectivement partie au moins deux éléments latéraux de pont basculant (22) qui sont préparés à la fixation aux extrémités latérales opposées l'une à l'autre d'un module de base du châssis de pont basculant (18).

3. Procédé selon la revendication 1 ou 2, **caractérisé en ce que** l'on utilise des éléments latéraux de pont basculant (22) qui comprennent des sections marginales de la caisse (60) à assembler avec le dessous de caisse (20) d'un module de base du châssis de pont basculant (18) au fond du pont basculant.

4. Procédé selon la revendication 3, **caractérisé en ce que** les sections marginales de la caisse (60) des différents jeux des éléments latéraux de pont basculant (22) comprennent différentes dimensions de largeur.

5. Procédé selon l'une des revendications précédentes, **caractérisé en ce que** des éléments latéraux de pont basculant (22) correspondants sont reliés de manière amovible au module de base du châssis de pont basculant (18) qui lui est affecté.

6. Procédé selon l'une quelconque des revendications précédentes, **caractérisé en ce que** les éléments latéraux de pont basculant (22) d'au moins un jeu d'éléments latéraux de pont basculant sont vissés sur un module de base du châssis de pont basculant (18) au moyen d'éléments de vissage et/ou rivés au moyen d'éléments de rivetage.

7. Groupe de modules pour la fabrication de ponts basculants pour des bennes basculantes en particulier selon le procédé selon au moins une des revendications précédentes, **caractérisé par** plusieurs modules de base du châssis de pont basculant (18) conçus essentiellement de manière homogène qui comprennent respectivement un dessous de caisse de pont basculant (20) et sont préparés pour fixer différents éléments latéraux de pont basculant (22) au choix, et **caractérisé en outre par** des éléments latéraux de pont basculant (22) différents, sachant que les éléments latéraux de pont basculant (22) sont conçus de manière appropriée pour un assemblage avec le module de base du châssis de pont basculant (18).

8. Groupe de modules selon la revendication 7, **caractérisé en ce que** des jeux d'éléments latéraux de pont basculant (22) comprennent respectivement au moins deux éléments latéraux de pont basculant (22) qui sont préparés pour une fixation aux extrémités latérales opposées l'une à l'autre d'un module de base du châssis de pont basculant (18).

9. Groupe de modules selon la revendication 7 ou 8, **caractérisé en ce que** les éléments latéraux de pont basculant (22) comprennent des sections marginales de la caisse (60) à assembler avec le dessous de caisse (20) d'un module de base du châssis de pont basculant (18) à un fond de pont basculant.

10. Groupe de modules selon la revendication 9, **caractérisé en ce que** les sections marginales de la caisse (60) des différents jeux des éléments latéraux de pont basculant (22) comprennent différentes dimensions de largeur.

11. Groupe de modules selon au moins l'une des revendications 7 à 10, **caractérisé en ce que**, au moins quelques éléments latéraux de pont basculant (22) comprennent des barres de retenue (34) pour évacuer des matériaux en vrac.

12. Groupe de modules selon au moins l'une des revendications 7 à 11, **caractérisé en ce que** les éléments latéraux de pont basculant (22) des différents jeux d'éléments latéraux de pont basculant se différencient par différents dispositifs de fixation ou/et de positionnement articulé des parois latérales du pont basculant (64).

13. Groupe de modules selon au moins l'une des revendications 7 à 1 2, **caractérisé en ce que** les éléments latéraux de pont basculant (22) peuvent être reliés de manière amovible à un module de base du châssis de pont basculant (18).

14. Groupe de modules selon au moins l'une des revendications 7 à 13, **caractérisé en ce que** les éléments latéraux de pont basculant (22) d'au moins un jeu d'éléments, latéraux de pont basculant peuvent être vissés au moyen des éléments de vissage au module de base du châssis de pont basculant (18).

15. Groupe de modules selon au moins l'une des revendications 7 à 14, **caractérisé en ce que** les modules de base du châssis de pont basculant (18) et les éléments latéraux de pont basculant (22) d'au moins un jeu d'éléments latéraux de ponts basculant sont fournis avec des éléments de fixation adaptés les uns aux autres (54, 56).

16. Groupe de modules selon au moins l'une des revendications 7 à 15, **caractérisé par** des ensembles d'appuis à rotule (24, 26) pour une fixation au module de base du châssis de pont basculant (18).

17. Groupe de modules selon la revendication 16, **caractérisé par** des éléments d'adaptateur servant à la fixation variable d'ensembles d'appuis à rotule (24, 26) au module de base du châssis de pont basculant (18).

18. Groupe de modules selon au moins l'une des revendications 7 à 17, **caractérisé par** des jeux de moyens de fixation pour le montage d'éléments latéraux de pont basculant (22) sur des modules de base du châssis de pont basculant (18).

19. Groupe de modules selon au moins l'une des revendications 7 à 18, **caractérisé en ce qu'**au moins un élément latéral de pont basculant (22) comprend une caisse (60) avec une paroi latérale (64) disposée sur celle-ci et fixée de manière particulièrement rigide.

20. Pont basculant, fabriqué avec un module d'un groupe de modules selon l'une des revendications 7 à 19.

21. Module de base du châssis de pont basculant pour un groupe de modules selon l'une des revendications précédentes 7 à 19 avec des moyens de fixation des éléments latéraux de pont basculant.
